# EUROPEAN PATENT APPLICATION

(11) **EP 4 556 215 A1**
(43) Date of publication of application: **21.05.2025**
(21) Application number: 24213365.0
(22) Date of filing: 15.11.2024
(51) Int. Cl.: B32B 5/02, B32B 7/12, B32B 9/00, B32B 9/04, B32B 13/12, B32B 13/14, B32B 15/082, B32B 15/09, B32B 15/14, B32B 15/18, B32B 15/20, B32B 27/12, B32B 27/30, B32B 27/36, E04C 2/26

(54) **LIGHTWEIGHT PANEL FOR USE IN BUILDING AND METHOD FOR ITS USE**

(30) Priority: 16.11.2023 IT 202300024285
(71) Applicant: Gammastone S.r.l., 00068 Rignano Flaminio (RM) (IT)
(72) Inventor: LUPI, Gioele, Rignano Flaminio (IT)
(74) Representative: Palladino, Saverio Massimo

(57) **Abstract**

A multi-layer panel (10; 20) is described comprising, in sequence, a decorative slab (11) made of natural stone or Ultra High Performance Concrete, a structural central layer (12), a metal sheet (13) and a textile layer (14) made of fabric, nonwoven fabric, or of a glass fiber mat. The textile layer makes direct gluing of the panel possible with cementitious adhesives used in construction. The panel can be produced in large format slabs, not achievable with the panels currently on the market.

## Description

### FIELD OF THE INVENTION

The present invention relates to the technical field of construction components, and in particular a multi-layer panel of the decorative type, and to a method for using said panel.

### STATE OF THE ART

Natural stone materials are widely used, and are of considerable economic importance, for the production of slabs or panels used in construction to cover structural surfaces (made for example of concrete or bricks). The most widely used materials in the sector include, for example, marble, granite and travertine.

Marble, in particular, is a natural product that has great charm and is widely used in the construction field. It is mainly used for interior and exterior paving and wall coverings, thanks to its aesthetic characteristics and durability.

Another material of considerable importance in the field is UHPC (Ultra High Performance Concrete), which, despite its inert nature, takes on an elegant appearance after being mixed with coloring oxides, creating an effect similar to concrete but with a wide variety of available colors.

Due to their aesthetic qualities, and also to their prices which vary from medium to very high, these materials are typically used in prestigious or high-end applications.

In these applications, it is also desirable for the coverings (particularly of floors) to be made of large slabs, for example greater than 1.5 x 3 m or, according to typical size in the field, 1.6 x 3.2 m; slabs of these dimensions are perceived as a high-end choice from an aesthetic point of view, further to offering practical advantages during installation.

Slabs of this size are now made of porcelain stoneware, often with effects that simulate natural marble or concrete, which has thus become widespread in the field. However, from an aesthetic and prestige point of view, porcelain stoneware is a fallback compared to natural stone and UHPC.

Natural stone and UHPC continue to face challenges connected with panel size, as 3.20 m x 160-150 cm slabs require a significant thickness, resulting in significant weight that makes transportation and installation problematic. For example, a slab of this type can weigh over 350 kg for a surface area of approximately 5 square meters, which represents a challenge in terms of logistics and installation. Obviously, large-format marble slabs, which can reach the dimensions indicated above, are commercially available, but they can be processed exclusively by marble workers' workshops, moved with cranes and then cut into smaller pieces. Essentially, it is practically impossible to install a real marble slab of such large size on the floor or wall.

To overcome the problem, the use of lightweight panels has been proposed, consisting of a central core that provides structure and resistance, an external slab that can be made of natural stone or UHPC, and a rear sheet of aluminum or stainless steel. This structure allows large format panels to be produced, which are relatively lightweight, yet highly resistant to breakage and impact. Panels of this type can be installed dry, i.e. with screws or other mechanical retention elements, and are commonly used for ventilated facades and wall coverings for both interior and exterior applications.

However, these lightweight panels cannot be glued directly with the normal cementitious adhesives used in the construction sector. For example, for laying floors, cementitious adhesives are used, distributed in a high thickness on the screed, i.e. the layer that is formed above the deck and which acts as a leveling agent for the latter and as a surface suitable for laying the floor. These adhesives, distributed on the screed with a high thickness, are not suitable for gluing the metal sheet of the lightweight panels.

For their gluing, it would be necessary to use, for example, two-component adhesives (so-called structural adhesives), but these are not suitable for use in the construction field, as they cannot be used in high thickness (to compensate for the small differences in level of the screed), and have short solidification times, thus giving operators little time to lay the panels, and above all not allowing the panel to be moved or repositioned in the event of installation inaccuracies.

To date, therefore, there is no practical way to install natural stone or UHPC coverings in the form of large slabs (at least 1.5 x 3 m), as would be required by the construction market for high-end installations.

A general aim of the present invention is to provide a panel comprising a slab made of stone material or UHPC and with dimensions of up to 1.6 x 4 m, which can be glued with traditional methods and materials in the construction field.

### SUMMARY OF THE INVENTION

These and other objects are achieved with the present invention which, in a first aspect thereof, concerns a lightweight panel comprising a central layer which provides structure and resistance, an external slab made of natural stone or UHPC, and a rear metal sheet, characterized in that it further comprises a textile layer formed by fabric, non-woven fabric or a glass fiber mat, glued to the external face of the metal sheet.

In a second aspect thereof, the invention relates to a method for laying a lightweight panel as defined above.

### BRIEF DESCRIPTION OF THE FIGURES

The invention will be described below with reference to the figures, in which:
- Figure 1 diagrammatically represents a sectional view of a panel of the invention in its simplest embodiment;
- Figure 2 diagrammatically represents a sectional view of a panel of the invention in an alternative embodiment; and
- Figure 3 diagrammatically represents a panel of the invention in use, i.e. laid to form a floor.

### DETAILED DESCRIPTION OF THE INVENTION

In the Figures, an equal number corresponds to an equal element.

The invention is based on the observation made by the inventor that the addition of a layer of fabric, non-woven fabric, or of a glass fiber mat, to the back of a lightweight panel of a known type, by gluing the fabric, non-woven fabric or mat to the rear metal sheet of the panel, makes it compatible with traditional cementitious adhesives and adapted for use with the laying methods currently in use in the field.

In short, in the present description and claims, the layer consisting of fabric, non-woven fabric, or a glass fiber mat, is indicated with the cumulative definition of "textile layer", unless it is necessary to individually and specifically define the type of material that constitutes it; besides, non-woven fabric is also indicated with the initials NWF.

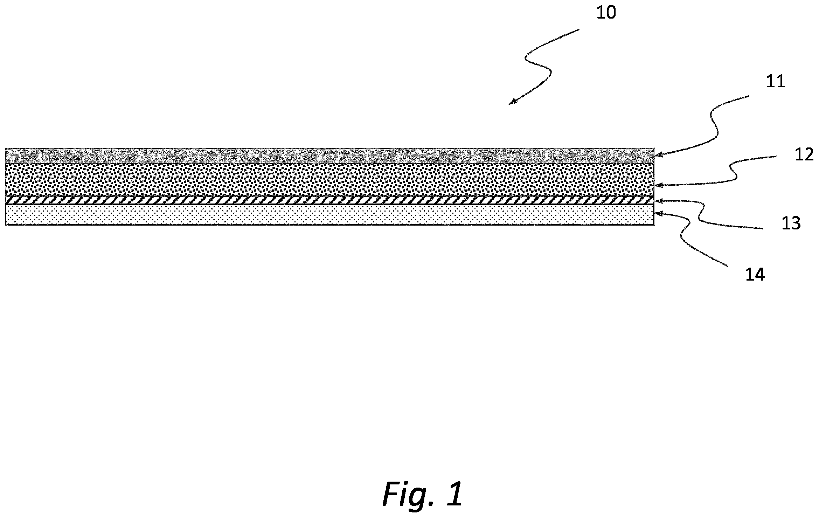

In its simplest configuration, comprising the minimum number of component layers, the panel of the invention has the structure shown diagrammatically in Fig. 1 in a sectional view. The panel, 10, consists of an external decorative slab, 11, a central layer 12, a metal sheet 13 and the textile layer 14; in the figure, the thicknesses are not to scale for better identification of the elements that form the panel.

Apart from the addition of the textile layer, the panel of the invention is identical to the lightweight panels already used in the construction field.

An example of these panels is described in European patent EP 2954129 B1 to MARMOELETTROMECCANICA S.R.L.

The external decorative slab 11 may be made of any natural material used in construction, in particular for floors. The natural materials most commonly used in the field include marble, granite and travertine, but it is also possible to use other natural materials, such as pietra serena (a type of sandstone) or porphyry (the latter preferably for the paving of commercial, industrial or hi-tech environments). Alternatively, the slab 11 can be made of UHPC, appropriately colored or decorated.

The decorative slab, made of stone or UHPC, can have different finishes; for example it can be honed, polished, bush-hammered, or have any other type of finish known in the field.

The central layer 12 can be made of polymer material, e.g. PVC or PET foam, such as in the panel of patent EP 2954129 B1.

In a preferred embodiment, the central layer 12 is made of the composite material described in Italian patent application No. 102023000018105 to the present Applicant. This composite material consists of a matrix of vitreous china or sintered clay, inside which there are granules of a lightweight material selected from expanded clay, pumice and expanded glass; this composition ensures lightness for the core, but at the same time high mechanical strength, in particular compressive strength, and thus makes it particularly suitable for use in paving making.

Layer 13 is made of a metal sheet, typically aluminum or stainless steel.

Finally, the textile layer 14 is made of fabric, NWF, or consists of a glass fiber mat, and is the element characterizing the invention, which distinguishes it from known panels and allows it to be used with traditional methods of the construction sector. The fabric and NWF can be made of materials including both natural and synthetic fibers, comprising for example cotton wool (wadding), felt, polyester and the like. Particularly useful is the use of waste fiber felts, such as those already used in acoustic and thermal insulation sheets in the construction sector. A useful type of material for making the textile layer of the present invention is TNT MAPETEX 50 by Mapei^{®} S.p.A., or the felt SKU ISO-FLT-200 sold by Keyhelm s.r.l.

Even if the panel can be made in a wide range of dimensions, typical dimensional values of the components of the panel of the invention are: a thickness of the slab of stone or UHPC material varying between 3 and 20 mm, preferably between 4 and 7 mm, more preferably about 5 mm, for covering facades, and between 8 and 12 mm, more preferably about 10 mm, for floors; a thickness of the central layer (core) comprised between 5 and 10 mm; a thickness of the stainless steel or aluminum sheet between 0.2 and 1 mm; and a non-woven fabric with a weight comprised between 30 and 1000 grams per square meter, preferably between 30 and 500 grams per square meter.

In an alternative embodiment of the panel of the invention, between the central layer 12 and the external decorative slab 11, or between the central layer 12 and the metal sheet 13, or in both positions, there are one or two glass fiber mats, not necessarily equal to each other, each with a weight comprised between 30 and 800 g/m², preferably between 100 and 500 g/m².

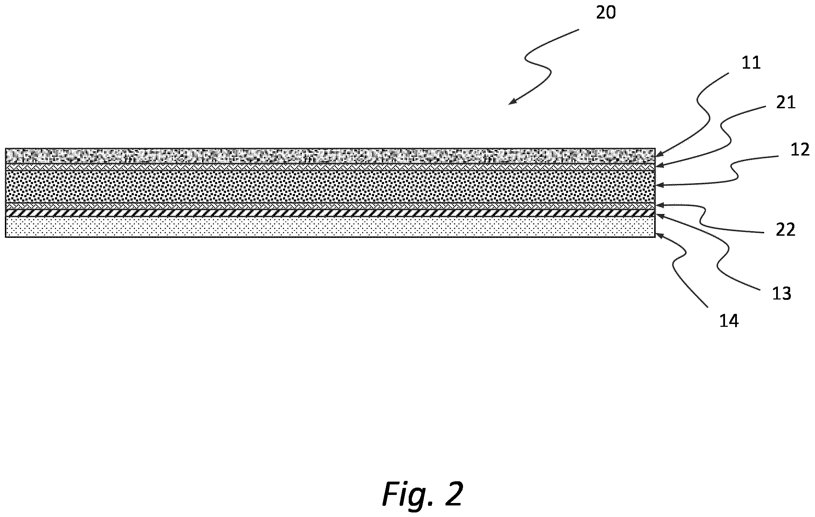

Figure 2 shows a panel of the invention according to this alternative embodiment; the case in which there are glass fiber mats in contact with both faces of the central layer 12 is exemplified, but as mentioned, the mat could be present only between layer 12 and the slab 11, or only between layer 12 and the sheet 13.

In this embodiment of the panel 20, between the central layer 12 and the external decorative layer 11 there is a glass fiber mat 21, and between the central layer 12 and the metal sheet 13 there is a further glass fiber mat 22.

All layers forming the panel of the invention, both in the simplest case (panel 10), and in the case of the presence of one or two mats between the central layer 12 and the slab 11 and/or sheet 13, are joined together using structural adhesives. As known, these adhesives are able to withstand high mechanical strain and replace traditional joining methods such as screws and rivets, for example. Structural adhesives are modified acrylic resins (typically cyanacrylic), polyurethane resins, epoxy resins, phenolic resins or silicone resins, or thermosetting structural adhesives; the preferred adhesives for the purposes of the present invention are those based on polyurethane and epoxy. The structural adhesive is applied with a quantity from 30 to 300 g/m² per layer. These adhesives are widely available on the market.

During laying, and then in use, the textile layer 14 acts as an interface between the panel and the cementitious adhesive, guaranteeing secure and stable adhesion. In this way, large format panels can be made, both of natural stone and UHPC, with dimensions up to 4 m x 160 cm, which can be easily glued to floors or wall coverings. Further, the textile layer helps to manage expansions, improving the security and durability of the installation, and, thanks to its compressibility, allows to compensate for minimal differences in level or defects present in the surface to which the panel is glued.

In its second aspect, the invention concerns the method for using the panel described above.

The panel can be used for laying floors or for covering interior or exterior walls; in the case of interior walls, the use can be for example for glued wall coverings of bathrooms, kitchens, lobbies, etc. The application for laying floors is described below as an example, but the panels of the invention can be used in same or similar ways also in the other foreseen applications.

As mentioned, the panel of the invention allows traditional laying materials and method of the construction field to be used.

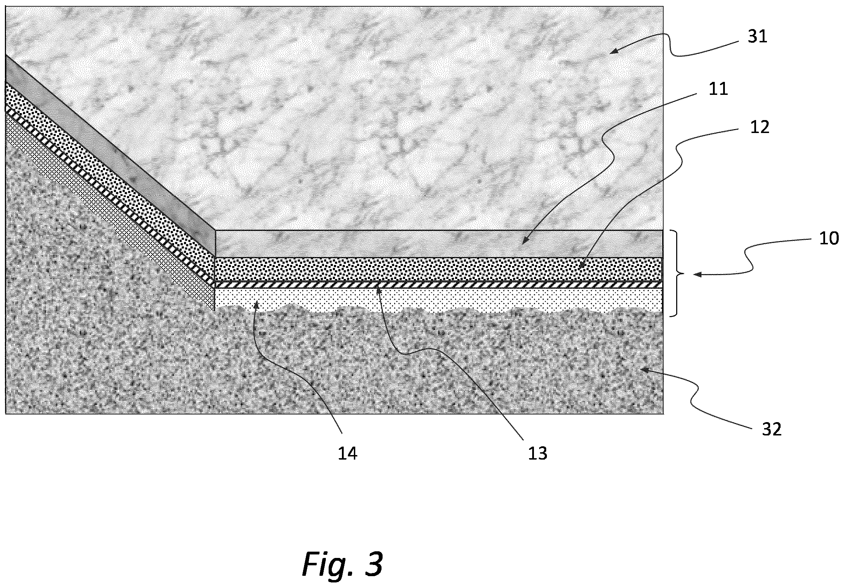

Figure 3 diagrammatically shows a perspective view of a panel of the invention laid on a layer of adhesive; for simplicity of representation, a panel of type 10 is shown, i.e. without mats 21 and 22; the panel 10 is formed by the previously described component layers 11 to 14, while the element 31 shown in the figure is the upper surface, facing outwards, of the decorative slab 11, which after laying will constitute the visible part of the floor. The panel 10 is placed on the layer of cementitious adhesive 32, distributed on a base or screed (not shown in the figure).

The adhesive 32 is glued to the textile layer 14 and partially incorporates it. This allows for secure gluing of the panel, following the common techniques used for gluing traditional coverings, in particular the use of common cementitious adhesives. The cementitious adhesive is applied as recommended by the manufacturers, indicatively in the amount of about 3 kg/m². Commercial cementitious adhesives useful for the purposes of the present invention are for example H40 No Limits by Kerakoll and Ultralite^{®} S2 Flex by Mapei^{®} S.p.A.

The textile layer also performs the function of absorbing small expansions both of the panel itself and of the screed, providing a shock-absorbing action which contributes to the stability of the installation.

As well as allowing the laying of floors with large format slabs, the panel of the invention offers a series of intrinsic advantages, both operational and environmental:
- it is easy to install and process, even on site, for example to make cuts, holes, etc. therein, which can be carried out with all tools and machines available on the market, by a marble worker or directly by the worker on the construction site;
- it can be easily moved, even by hand or with the aid of simple suction cups, already used for moving large-format porcelain stoneware slabs;
- thanks to limited thickness and weight, which can be reduced to a quarter of the corresponding stone/UHPC-only panel, packaging and logistics are optimized, with a reduction in the CO₂ footprint per square meter of floor/covering installed.

## Claims

1. Lightweight panel (10) with lateral dimensions of up to 1.6 x 4 m for use in construction, including:
- a central layer (12) which constitutes the structural element of the panel;
- on one face of the central layer, an external decorative slab (11) made of natural stone or Ultra High Performance Concrete;
- on the face of the central layer opposite to the one on which the external decorative slab is present, a metal sheet (13);
**characterized by** the fact that it further comprises a textile layer (14) formed by fabric, non-woven fabric or a glass fiber mat, glued to the external face of the metal sheet.

2. Lightweight panel according to claim 1, in which the external decorative slab (11) is made of a natural stone chosen from marble, granite, travertine, pietra serena and porphyry.

3. Lightweight panel according to any one of claims 1 or 2, wherein the external decorative slab (11) in stone or Ultra High Performance Concrete has a finish chosen from sanding, polishing and bush-hammering.

4. Lightweight panel according to any one of the preceding claims, in which the central layer (12) is made of polymeric material, or with a composite material consisting of a matrix of vitreous china or sintered clay, inside which there are granules of a lightweight material chosen among expanded clay, pumice and expanded glass.

5. Lightweight panel according to any one of the preceding claims, wherein the metal sheet (13) is made of aluminum or stainless steel.

6. Lightweight panel according to any one of the preceding claims, wherein when the textile layer is constituted by a fabric or a non-woven fabric, these are made with natural or synthetic fibres.

7. Lightweight panel according to any one of the preceding claims, in which the external decorative slab (11) has a thickness of between 3 and 20 mm, the central layer (12) has a thickness of between 5 and 10 mm, the metal sheet (13) has a thickness between 0.2 and 1 mm, and the textile layer (14) has a weight per unit area between 30 and 1000 grams per square meter.

8. Lightweight panel (20) according to any one of the preceding claims, further comprising a glass fiber mat (21) between the central layer (12) and the external decorative slab (11), and/or a glass fiber mat (22) between the central layer (12) and the metal sheet (13).

9. Lightweight panel according to claim 8, wherein each of said glass fiber mats (21; 22), independently of each other, has a weight per unit area between 30 g/m² and 800 g/m².

10. Lightweight panel (10; 20) according to any one of the preceding claims, wherein all the component layers are adhered to each other with structural adhesives chosen from modified acrylic resins, polyurethane resins, epoxy resins, phenolic resins, silicone resins, and thermosetting structural adhesives, applied in a quantity of between 30 and 300 g/m² for each layer of adhesive.

11. Method for laying a panel of any one of the preceding claims on a floor or on a wall, comprising the steps of:
- distribute a layer of cement adhesive (32) on a base or screed;
- lay the panel (10; 20) on said layer of adhesive, facing the textile layer (14) of the panel towards the latter.
